Europäisches Patentamt

European Patent Office

Office européen des brevets

(11) Publication number: **0 347 923**
A1

## (12) EUROPEAN PATENT APPLICATION

(21) Application number: **89111411.8**

(22) Date of filing: **22.06.89**

(51) Int. Cl.⁴: **A01N 1/02 , A61B 19/00**

(30) Priority: **23.06.88 US 211475**

(43) Date of publication of application:
**27.12.89 Bulletin 89/52**

(84) Designated Contracting States:
**AT DE FR GB IT NL**

(71) Applicant: **Perrotta, Nicholas J.**
**3426 East Camden**
**Tucson Arizona 85716(US)**

(72) Inventor: **Perrotta, Nicholas J.**
**3426 East Camden**
**Tucson Arizona 85716(US)**
Inventor: **Kaneko, Mitsunori**
**Shin-Senri-Nishimachi**
**2-22, 3-301, Toyonaka City Osaka, 565(US)**

(74) Representative: **Wächtershäuser, Günter, Dr.**
**Tal 29**
**D-8000 München 2(DE)**

(54) **Portable pulsatile organ perfusion device and method.**

(57) A portable pulsatile perfusion device includes a pump (14) which pumps measured volumes of perfusate in pulses of selected duration at a selected repetition rate into a donor heart (35) immersed in perfusate. The aorta of the heart is sealed closed. An outlet tube (34) of the pump is connected to a cannula extending through an incision into the aorta at the sealed end. The perfusate pulse volume, width, and repetition rate are selected so that the aortic valve is kept closed during the perfusate pulses. The pump produces perfusate pulses in response to actuation of a solenoid (15), which advances a piston into a continued volume of perfusate, expelling perfusate into the outlet tube through a closed valve (33). Retraction of the piston by a return spring (23) when the solenoid is deactivated draws fresh perfusate into the volume.

_FIG.1B_

## PORTABLE PULSATILE ORGAN PERFUSION DEVICE AND METHOD

### BACKGROUND OF THE INVENTION

The invention relates to apparatus and methods for perfusion of living hearts, kidneys, and other donor organs destined for transplant.

Donor organ transplant operation, such as heart transplant and kidney transplant operations and the like, are becoming more common. In the past, when a donor's organs are removed from a "brain dead" donor, the organs have been preserved in an iced saline bath. The period of time beginning when the organs are removed from a donor until they are implanted in a recipient is called "ischemic" time. The donor organ is kept sterile, also during ischemia it is preserved in a special cold nutrient solution that reduces damage that would otherwise occur from lack of oxygen and nutrients and from build-up of waste materials in the organ. The longer the ischemic time, the greater the damage to the donor organ due to such factors. At the present time, maximum ischemic times vary, depending on the type of organ and local medical practice. In the United States, maximum approved ischemic times are four hours for hearts, two hours for lungs, 48 hours for kidneys, and eight hours for livers. These short times impose serious limitations on the available donor pool in the United States and worldwide. Furthermore, significant tissue damage occurs with the current methodology used in present donor organ preservation processes.

Organ transplantation has evolved into a successful therapeutic modality for many individuals with organ failure. The success rate and long term graft survival of all transplanted organs has dramatically improved in recent years. However, limitations in methods of organ preservation still impede optimal results. The organ procurement protocol and its limitations are similar for all visceral organs, in that once an organ has been explanted, it must be implanted in a suitable recipient within a specific period of time, and the recipient must be more or less immunologically matched to receive that organ.

Ischemic time limits vary, depending upon 1) the type of organ, and 2) the method by means of which it was preserved during that time. After explantation from a donor, the organs are no longer in a natural physiological state. That is, the pulsatile blood flow of nutrients and oxygen to and the removal of waste products from the cells ceases. This disrupts the metabolic and catabolic mechanisms within each cell and immediately the cells begin the dying process. At different rates, each cell passes through periods first of reversible damage, then irreversible damage and finally death. The objectives for successful organ preservation are to retard or stop the process of cellular degradation, damage and death, to maintain or improve the organ's viability on a cellular level, and to lengthen the time the organ may remain ischemic and resume satisfactory function after reperfusion. During ischemia, these objectives are apparently best satisfied if the organ is perfused with nutrients and oxygen; the metabolism or other cellular processes are slowed (i.e., reducing the temperature), and the organ does little or no work.

Prior to this invention, two approaches have been developed to achieve one or more of these objectives of organ preservation. The first approach is simple immersion and storage of the organ in a cold ($0^{\circ}$ C) saline bath. The second method has been to devise an apparatus to perfuse the organ with an oxygenated nutrient solution generally at ice bath temperatures. In either case, the ischemic time is dependent on and will vary depending on the method of preservation employed, as well as other factors. It is also an important consideration that any apparatus must be simple, relatively inexpensive, reliable, and portable since the organs are almost always transported to a distant donor.

Successful perfusion of the heart is accomplished by perfusing the coronary arteries, which only can occur if the aortic valve is closed. Theoretically, the aortic valve closes when the aortic pressure is higher than the left ventricular pressure. This is the case whether the heart is in its normal physiological state or is perfused during the preservation process. Therefore, the perfusion preservation devices must achieve a sufficient aortic pressure in order to close the aortic valve and perfuse the coronaries.

Simple cold immersion and storage is the current art that mostly is employed clinically in heart transplantation. It is a very simple and demonstrably reliable technique, but has several serious limitations. Although it does slow the metabolism and cellular processes by extremely cold temperatures ($0^{\circ}$ C) and the heart is arrested, no nutrients or oxygen are distributed to the cells nor are any waste products removed. For hearts, an ischemic time up to only four hours is the general standard. Most donor hearts are simply transported in an iced saline bath and must be transplanted within about four hours. This short ischemic time presents serious limitations to the distances which hearts can be transported for transplantaton. In addition, there is some speculation that $0^{\circ}$-$4^{\circ}$ C storage is much too cold and may itself cause damage. Other organs such as liver, pancreas, lungs, etc., are also stored in a manner similar to hearts. Therefore, they will also suffer from similar limitations due to cellular damage and death and be limited to an ischemic time inherent for that organ.

A second method which utilizes some type of perfusion apparatus has been studied in the laboratory but has had extremely limited exposure clinically. Long ischemic times have been successfully demonstrated as compared to those of simple immersion storage. Several device designs have been shown to improve the successful preservation of organs, especially donor hearts. All these devices attempt some method of perfusing the organ with an oxygenated nutrient solution, lowering the temperature, and lengthening the ischemic time.

There are basically three types of perfusion devices. One provides a constant pressure accomplished by means of continuously pumping the preservation solution to the top of a column of specified length. This column length determines the pressure head, closes the aortic valve and perfuses the coronaries. The second device provides perfusion with constant flow by using a roller pump, while the third type achieves pulsatile flow/pressure by a conventional electric motor attached with or without a cam to a piston. The pressures generated by any of the three methods are sufficient for closing the aortic valve and thus perfusing the coronaries. It is also hypothesized that pulsatile flow/pressure perfusion may be superior to constant flow or constant pressure perfusion, especially in hearts.

However, until this invention all these devices were either too complex, energy inefficient, large, or their fundamental design concepts did not desirably lend themselves to be taken out of the laboratory for practical clinical use, especially in the transport of an organ. The prior pump's inefficiency and energy consumption not only makes long term battery power impractical, but these pumps generate heat, so they must be thermally isolated from the cold preservation system. In addition to many potential system failures, leaks, etc., maintenance of the organ's sterility was difficult in these systems.

Kidneys are successfully preserved clinically for longer periods by a perfusion apparatus. However, the device is not compact, light in weight nor energy efficient enough to be a convenient transport device. Therefore, almost all kidneys initially undergo a period of suboptimal storage by being transported by simple cold immersion to their destination, then being attached to a perfusion apparatus.

The status of the art is generally indicated by Patents 3,632,473, 3,892,628, 3,914,954, 3,881,990, the publication "Hemodynamic and Myocardial Histologic and Ultrastructural Studies on Baboons from 3 to 27 Months Following Autotransplantation of Hearts Stored by Hypothermic Perfusion for 24 or 48 Hours", by Wicomb et al, in the "Journal of Heart Transplantaton", Vol. 5, No. 2, March-April, 1986, pp. 122-129, and "Perfusion Technology" by D. Pegg in "Organ Preservation for Transplantation", edited by Armand M. Karow, Jr., and David E. Pegg, Marcel Dekker, Inc., 1981, pages 477-495.

Short ischemic times in heart transplantation, unlike kidneys, do not permit HLA tissue typing. If sufficient time was available for HLA tissue typing, it is expected that there would be a reduction in both the frequency of organ rejection and immunosuppressive therapy, which translates to an increase in both short and long term graft survival, decreased side effects from immunosuppressive therapy, shorter hospital stays and lower patient cost.

Prior donor heart preservation systems have connected the output of the perfusion pump directly to the aorta, but have required a head perfusate pressure to keep the aortic valve closed. This required that the heart be kept in an upright position, with the aorta at the top, thereby making transport impractical.

There is a great need worldwide for an improved, portable organ perfusion device that is capable of providing "total" pulsatile perfusion of nutrient solution through organs of various kinds at certain cold temperatures for 24 hours or more.

## SUMMARY OF THE INVENTION

Accordingly, it is an object of the invention to provide an organ perfusion device which is relatively small, light in weight, uncomplicated, and is conveniently portable compared to prior organ perfusion devices.

It is another object of the invention to provide an organ perfusion device that results in improved long-term survival of recipients of donor organs.

It is another object of the invention to provide a pulsatile organ perfusion apparatus which provides control of important perfusion parameters, including perfusate pulse width, perfusate pulse frequency, and volume of each perfusate pulse.

It is another object of the invention to provide a donor heart perfusion apparatus and technique which avoids the need to maintain a constant perfusate pressure head and also avoids the need to maintain the donor heart in an upright position.

It is another object of the invention to provide a portable organ perfusion apparatus and method that preserves donor hearts and other organs for 24 hours or more with adequate nourishment at a preselected temperature.

Briefly described, and in accordance with one embodiment thereof, the invention provides a perfusion apparatus including a tank containing a nutrient solution (i.e., perfusate), and a pump assembly including a solenoid connected by a connecting rod with a piston or the like attached to one end. The piston is attached in sealed relationship to a moveable end of a bellows or diaphragm, the interior of which communicates with the interior of the tank through a one-way valve that allows perfusate to be drawn into the bellows when the piston is withdrawn by force of a return spring in the solenoid. The interior of the bellows also communications with a donor organ through a second one-way valve, and a tube such that when the piston is forced away by the solenoid, a quantity of the perfusate determined by the diameter of the bellows and the stroke length of the solenoid is forced into a tube that is connected by a cannula to the donor organ. In the described embodiment of the invention, the donor organ is a heart, the aorta of which is sutured to seal it, and the cannula is inserted through the innominate artery into the aorta and tied to form a seal. The amount of perfusate or preservation fluid pumped into the organ for each actuation pulse of the solenoid is controlled by an adjustable stop that controls the return travel distance of the solenoid plunger. A control circuit provides precise external control of the duration of each perfusate pulse and the frequency of the perfusate pulses. A battery pack connected to the control circuit is capable of operating the pump continuously for 24 hours or more. Except during each perfusate pulse, no perfusate is being expelled from the pump. The duration of the perfusate pulses and the frequency thereof are selected so that the aortic valve is essentially closed during at least a portion of each pulse, allowing "total" pulsatile perfusion of the nutrient solution through the coronary arteries. The perfusate then exits from the right atria of the heart donor back into the perfusate solution in which the heart is immersed. In the described embodiment of the invention, a suitable means is provided for maintaining the temperature of the perfusate at a selected temperature in the range from zero to twenty-five degrees Centigrade. For example, a pre-frozen substance that melts at the desired perfusate temperature is placed in contact with the tank wall between it and an insulative container. A pressure sensor is position in the donor organ and conductors are routed to monitoring electronics which can produce an alarm signal and/or a display of pressure in the donor organ.

BRIEF DESCRIPTION OF THE DRAWINGS

Fig. 1A is a section view diagram of the portable pulsatile organ perfusion device of the present invention.

Fig. 1B is a partial cutaway top view of the pulsatile perfusion device of Fig. 1A.

Fig. 2 is a partial perspective view of a donor heart with the aorta sutured closed and a cannula inserted thorugh an incision into the aorta and also connected to receive perfusate from a delivery tube of the pulsatile perfusion device of Figs. 1A and 1B.

Fig. 3 is a schematic diagram of a control circuit that drives the solenoid of the pulsatile perfusion pump of the apparatus of Figs. 1A-1B.

Fig. 4 is a schematic diagram of a charging circuit for charging the battery pack of the apparatus of Figs. 1A-1B.

Fig. 5 is a partial section view illustrating pre-frozen substance which surrounds the tank of the pulsatile perfusion device of Fig. 1.

Fig. 6 is a diagram elaborating a pressure transducer in the perfused organ connected to a pressure monitor.

DETAILED DESCRIPTION OF THE PRESENTLY PREFERRED EMBODIMENTS OF THE INVENTION

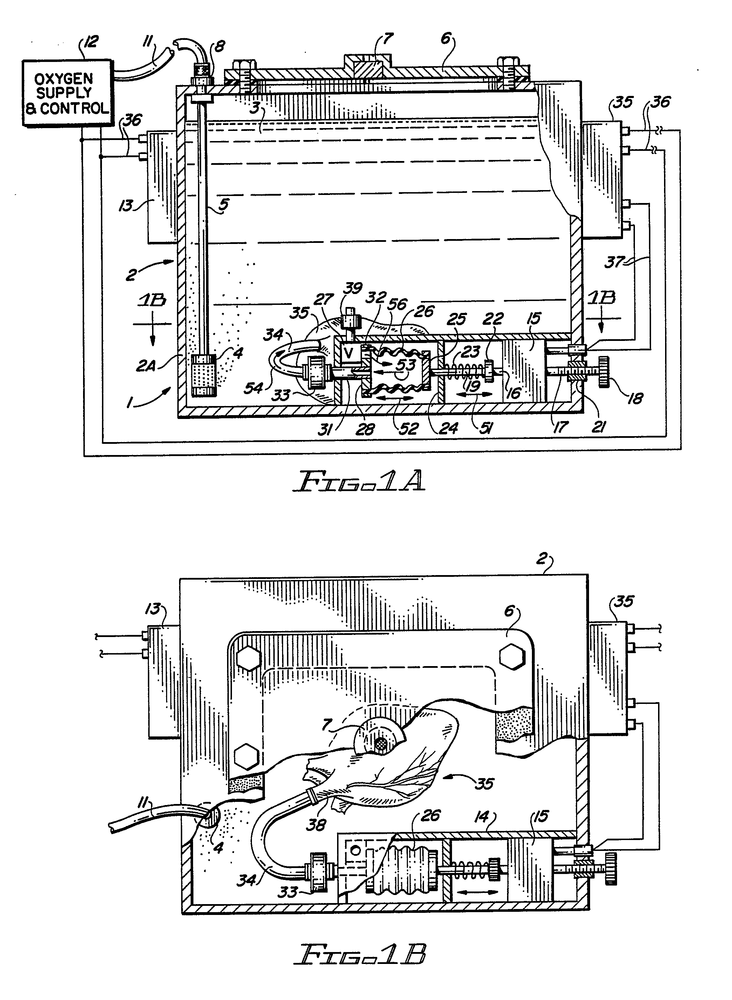

Referring now to Figs 1A and 1B, perfusion apparatus 1 includes a tank 2 containing approximately 2.5 to 5 gallons of perfusate 3, which may be nutrient solution containing a suitable amount of oxygen and/or carbon dioxide. Tank 6 has a removable cover 6 attached thereto. Cover 6 is vented through a filter 7. A diffuser 4 is attached to the lower end of a vertical tube 5 extending through the top edge wall of tank 2 through a feed-through 8 coupled by a flexible tube 11 to a supply and control system 12 that forces a preselected amount of oxygen and/or carbon dioxide gas (typically 95% oxygen and 5% carbon dioxide) to flow through the diffuser 4 so that the gas bubbles either continuously or intermittently through the perfusate 3.

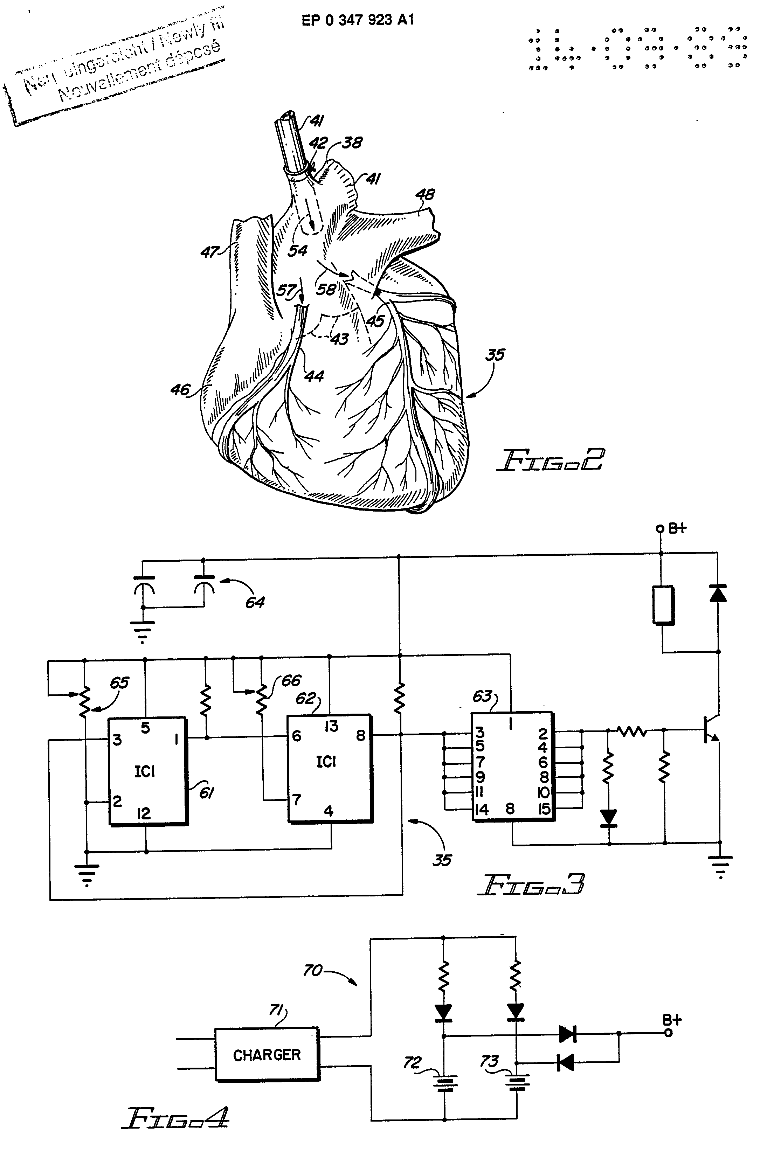

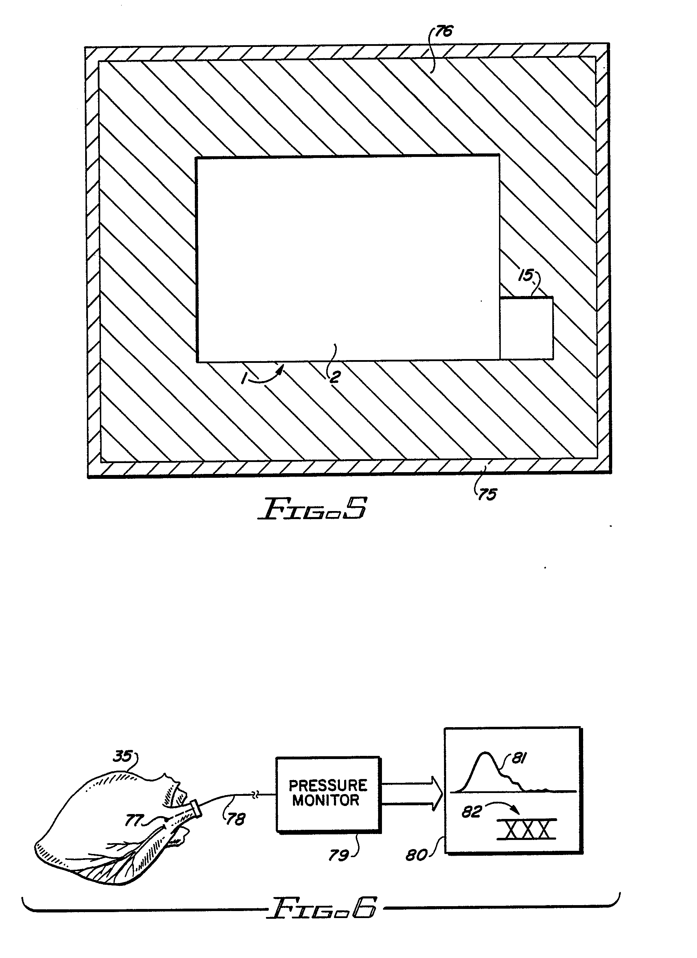

In the lower front portion of tank 2, a sealed pulsatile pump 14 encloses a solenoid 15 having a plunger 16 connected to rod 19, which is spring biased to the right by means of a spring 23 compressed between collar 22 and a guide 24 through which rod 19 slideably extends. Solenoid 15 is connected by electrical conductors 37 to an electronic control circuit 35, the circuitry of which is shown in Fig. 3. Before the solenoid 15 is actuated by an electrical pulse on conductors 37, rod 19 and a piston 25 attached to its left end move to the right to a limiting position, because when solenoid 15 is not actuated, bias spring 23 urges piston 25, rod 12 and plunger 16 to the right until plunger 16 hits a threaded stop 17 that passes through a threaded nut block 21 or micrometer and is connected to a rotatable knob 18. Knob 18 can be turned to adjust the length of the stroke of rod 19 and piston 25, and these adjust the volume of perfusate pumped during each perfusate pulse produced by pump 14.

A bellows 26 is connected in sealed relationship to the periphery of piston 25. The left end of bellows or diaphragm 26 is connected in sealed relationship to a stationery end plate 32. A tube 31 that extends to the right end of the sealed pump enclosure wall 14A of a check valve 33. Check valve 33 is coupled by a flexible delivery tube 34 to the aorta of a donor heart 35 immersed in the perfusate 3 and located generally at the center of the bottom of tank 2.

A check valve 27 permits flow of perfusate through a filter 39 and a passage in the wall of pump enclosure wall 14A and through an aperture 56 in stationery end plate 32 in the direction of arrow 56. Check valve 33 permits flow of solution only in the direction of arrow 54 from pulsatile pump 14 into the donor heart 35.

The portable pulsatile perfusion device 1 includes a rechargeable battery pack 13 connected by conductors 36 to control circuit 35. Conductor 36 also supplies power to an electrical gas control circuit of gas supply and control system 12; this gas control circuit is shown in Fig. 7.

It can be seen that solenoid control circuit 35, by controlling the frequency of actuation of solenoid 15 and the duration of each perfusate pulse, controls the pulsatile perfusion of the solution 3 pumped into the aorta of donor heart 35. The position of knob 18 controls the volume of perfusate pumped with each stroke of pump 14.

The solenoid 15 can be located inside the tank 2, as shown in Figs. 1A and 1B, or outside of it as indicated in Fig. 5.

During the operation of the pulsatile pump 14, bellows 26 expands as a result of the de-actuation of solenoid 15, whereupon piston 25 moves to the right under the influence of return spring 23, drawing perfusate 3 in the direction of arrow 56 through inlet opening 32 and check valve 27. When the solenoid is actuated, piston 25 rapidly moves to the left, forcing the volume of perfusate previously drawn into bellows 26 to flow through check valve 33 and through tube 34 in the direction of arrow 56 into the aorta of donor heart 35.

Before further description of the operation of the pulsatile perfusion system of Figs. 1A and 1B, it will be helpful to briefly review the structure and operation of a human heart, designated by reference numeral 35 in Fig. 2. The heart is a tough muscle having a right ventricle and a left ventricle which contract rhythmically to pump blood on its course throughout the body. A system of valves, including the aortic valve, the mitral valve, the pulmonary valve, and the tricuspid valve prevent blood from flowing backward. Oxygen-depleted blood returns from the body's venous system to the right side of the heart through the superior vena cava and inferior vena cava into the right atria and through the tricuspid valve into the right ventricle. Upon contraction of the right ventricle, the blood is forced through the pulmonary valve through the pulmonary artery to the lungs. The tricuspid valve closes and the pulmonary valve opens during the contraction of the right ventricle. Oxygen-rich blood returns from the lungs to the left side of the heart into the left ventricle through the pulmonary veins and the mitral valve. As the left ventricle contracts, the mitral valve is forced closed and the oxygen-rich blood is pumped through the aortic valve into the aorta and from the aorta through the innominate artery, the left common cartoid artery, and the left subclavian artery and into the body. After the left ventricle is finished contracting, the aortic valve then closes to prevent backflow of blood into the left ventricle. Then the major blood flow is into the coronary arteries.

Since the heart itself is a muscle doing hard work, it needs it own direct supply of oxygen-rich blood, which is supplied from the aorta through the coronary arteries, which branch off from the aorta. The coronary arteries in turn branch into smaller and smaller arteries becoming capillaries that extend through the entire heart muscle. In Fig. 2, the coronary arteries are designated by numerals 44 and 45. The aorta is designated by reference numeral 38, the right atria by reference numeral 46, and the superior vena cava is designated by numeral 47. Reference numeral 48 designates the pulmonary arteries. The aortic valve is indicated in its closed configuration by dotted lines 43.

The flexible delivery tube 34 leading from check valve 33 is connected in sealed relationship to a cannula 41 that is passed into the aorta 38 through an incision and sealed thereto by means of a tie 42.

In accordance with the present invention, however, the outlet of the pulsatile perfusion pump 14 is connected only to the aorta in the manner shown in Fig. 2. A surprising aspect of the present invention is that when the volume of perfusate 3 of pump 14 is in the range from 0.15 to 10 milliliters per stroke (i.e., per perfusate pulse), and the pulsatile frequency is in the range from approximately 5 to 80 perfusate pulses per minute, and the duration of each perfusate pulse is in the range from 100 milliseconds to one second, the aortic valve 43 remains completely closed during each perfusate pulse to adequately force perfusate solution 3 through the coronary arteries 44 and 45 in a manner that effectively, efficiently nourishes the donor heart 35 for storage periods of up to 72 hours. The aortic valve needs to be subjected to a pressure of a pressure greater than in the left ventricle to close it. This translates to a very small volume pulse width and rapid rise time for each infusion stroke. The pulse rate or repetition rate of the perfusate pulses is not important. Perfusate pumped through the coronary arteries 44 and through the capillary network extending from the coronary arteries eventually flows throughout the heart. From there, the perfusate flows to the right atria. The right atria has been dissected as a normal part of the cardiectomy, thus allowing the perfusate to exit through the cut atria and back into the tank.

Although not entirely understood, there is a growing acceptance of the superiority of pulsatile perfusion systems. It is believed that pulsatile perfusion systems more effectively distribute nutrient solution through the dense "bed of capillaries" that depend from the coronary arteries 44 and 45, thereby effectively providing nutrients to the entire heart and preventing cell deterioration and/or decay during perfusion.

Prior pulsatile perfusion systems have maintained a certain pressure threshold level in order to keep the aortic valve 43 closed, superimposing a pulsatile pressure upon that continuous threshold pressure. It is believed that the "total" pulsatile perfusion system of the present invention, in which the perfusate pressure drops between each perfusate pulse, provides greater and/or more effective perfusion throughout the entire capillary bed than prior "partial" pulsatile perfusion systems. It is believed that the heart developed as a pulsatile pump because pulsatile pumps are generally more efficient for pumping solution through capillary networks.

Fig. 3 shows a schematic block diagram of the control circuit 35. It includes a National Semiconductor NE556 circuit 61, which is a variable pulse width/pulse rate variable timer/oscillation. Block 62 also designates a NE556. Block 63 designates a National Semiconductor CD4049, which is a buffer inverter. A variable resistor or potentiometer 65 controls the pulse rate at which circuit 61 charges state. The output of circuit 61 provides the input of circuit 62. Potentiometer 66 determines the pulse width of circuit 62. In combination, circuits 61 and 62 form a variable pulse rate/pulse width timer oscillator.

The above described portable organ pulsatile perfusion apparatus weighs only approximately 25 pounds empty, including the rechargeable battery pack 13. It has the capability of maintaining adequate oxygen and carbon dioxide levels in the perfusate 3 for extended periods of time, up to and even in excess of 72 hours.

By immersing the tank 2 in pre-frozen substance such as ice, which can maintian the perfusate temperature at $0°C$, donor organs can be perfused at zero degrees. Alternatively, Pentadecane could be used to maintain the perfusate temperature at $10°C$. This structure is shown in Fig. 5, wherein numeral 75 designates an outer insulative container, reference numeral 76 designates the pre-frozen substance, and numeral 1 designates the perfusion apparatus of Figs. 1A and 1B. The prefrozen substance can be contained in bags or otherwise suitably disposed in the volume between the outer surface of perfusion device 1 and insulative container 75. The oxygen supply 12 preferably might include a compressed air tank which is stored within the insulative housing 75 in order to keep the air at approximately the same temperature as the perfusate. The pulsatile pump 14 can operate continuously for over 72 hours, utilizing power at the rate of only one ampere, which is easily supplied by the rechargeable battery pack 13 for that length of time. The benefits of optimum pulsatile perfusion are achieved with optimum perfusate pulse durations, optimum perfusate volume per stroke, and optimum perfusate pulse frequencies which can be easily determined experimentally with the above described system for different sizes of hearts and different types of organs. The pulsatile pump 14 can be easily replaced if a defect is detected. The entire pulsatile perfusion system is sufficiently inexpensive that it, or parts of it, can even be treated as a discardable item. As indicated in the diagram of Fig. 6, the donor heart 35 being perfused can have inserted therein a suitable pressure transducer 77 connected by insulated conductor 78 to an external pressure monitor 79 which produces a readout 80 illustrating the pressure wave 81 and alphanumeric readout information 82 to provide a readily understandable indication of whether the perfusion apparatus is performing properly.

The invention fills this important need in organ preservation by providing a device that results in ischemic times up to 72 hours for donor hearts, and is portable, energy efficient, reliable, simple, and if desired can maintain an extremely constant fixed temperature higher than currently used. By increasing the safe ischemic time, the device of the present invention will not only improve the global cellular integrity, viability and function of the donor organ, but also permit routine HLA typing of the donor and recipient, permitting the best histocompatible match. It is foreseeable that the improved immunological match would decrease rejection intensity, frequency and reduce the immunosuppressive therapy while lengthening the time of graft survival.

While the invention has been described with reference to a particular embodiment thereof, those skilled in the art will be able to make various modifications to the described embodiment without departing from the true spirit and scope of the invention. For example, the described apparatus may be useful in perfusion of other body parts. The term "organ" as used herein is intended to encompass such body parts.

## Claims

1. A method of temporarily storing a donor heart, comprising the steps of:

    (a) sealing an open end of an aorta of the heart;

    (b) inserting a cannula into the aorta through an incision;

    (c) connecting the cannula to an outlet of a pulsatile pump;

    (d) immersing the heart in a nutrient solution;

    (e) perfusing the nutrient solution through coronary arteries of the heart by

    (i) advancing a piston into a volume confining nutrient solution for a first duration,

    (ii) expelling a first amount of the nutrient solution from the volume into the outlet, through the cannula, and into the aorta in response to the advancing of the piston, and closing an aortic valve of the donor heart in response to pressure produced in the aorta by the expelling,

    (iii) retracting the piston from the volume after the first duration,

    (iv) drawing a first amount of the nutrient solution into the volume through an inlet of the pulsatile pump in response to the retracting of the piston,

    (v) repeating steps (i) through (iv) at a predetermined repetition rate.

2. The method of Claim 1 including controlling a distance through which the piston is advanced and retracted to determine the first amount of nutrient solution.

3. The method of Claim 1 including bleeding nutrient solution perfused through the heart back into the nutrient solution in which the heart is immersed.

4. The method of Claim 1 including causing the first duration to be in the range from 100 milliseconds to 1 second, the predetermined repetition is in the range from approximatley 5 to 80 times per second, and the first amount to be in the range from approximatley 0.15 to 10 milliliters.

5. The method of Claim 1 including maintaining at least a predetermined level of oxygen in the nutrient solution.

6. The method of Claim 1 including maintaining the nutrient solution at a selected temperature during the perfusion.

7. The method of Claim 1 including transporting the heart during the perfusion.

8. The method of Claim 1 including using a solenoid to advance the piston and using a return spring to retract the piston.

9. An apparatus for perfusion of a donor organ, comprising in combination:

    (a) a container containing nutrient solution, the donor organ being immersed in the nutrient solution;

    (b) a pulsatile pump including

    (i) variable volume means for confining nutrient solution, having an inlet and an outlet;

    (ii) first means for decreasing a volume of the variable volume means to expel nutrient solution through the outlet and increasing the volume to draw nutrient solution from the container through the inlet;

    (iii) second means for controlling an amount of nutrient solution expelled;

    (iv) third means for controlling a first amount of time during which the volume is a decreased amount and a second amount of time during which the volume is an increased amount.

    (c) means for conducting nutrient solution from the outlet into the donor organ.

10. The apparatus of Claim 9 including means for bubbling oxygen through the nutrient solution.

11. The apparatus of Claim 9 wherein the variable volume means includes a bellows having a moveable end connected to the first means.

12. The apparatus of Claim 11 wherein the first means includes a solenoid having a moveable element connected to the moveable end of the bellows.

13. The apparatus of Claim 11 wherein the second means limits a travel distance of the moveable element of the solenoid.

14. The apparatus of Claim 13 wherein the third means includes a control circuit for controlling a duration of time during which the solenoid is actuated and a repetition rate for actuating the solenoid.

15. The apparatus of Claim 14 including a means for maintaining the container at a predetermined temperature and a battery for supplying power to the control circuit.

16. The apparatus of Claim 15 wherein the temperature maintaining means includes frozen substance in thermal contact with the nutrient solution, the frozen substance having a melting point equal to the predetermined temperature.

17. A method of temporarily storing a donor organ, comprising the steps of:

(a) inserting a cannula into an incision in the organ;

(b) connecting the cannula to an outlet of a pulsatile pump;

(c) immersing the organ in a nutrient solution;

(d) perfusing the nutrient solution through the organ by

(i) advancing a piston into a volume confining nutrient solution for a first duration,

(ii) expelling a first amount of the nutrient solution from the volume into the outlet, through the cannula, and into the aorta in response to the advancing of the piston,

(iii) retracting the piston from the volume after the first duration,

(iv) drawing a first amount of the nutrient solution into the volume through an inlet of the pulsatile pump in response to the retracting of the piston,

(v) repeating steps (i) through (iv) at a predetermined repetition rate.

*FIG. 1A*

*FIG. 1B*

*Fig-2*

*Fig-3*

*Fig-4*

*FIG.5*

PRESSURE
MONITOR

*FIG.6*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-3 892 628 (THORNE et al.)<br>* Column 1, line 58 - column 2, line 36; column 2, lines 46-52; figure 1 *<br>--- | 1,9,10,17 | A 01 N 1/02<br>A 61 B 19/00 |
| A | US-A-4 186 565 (TOLEDO-PEREYRA)<br>* Column 1, line 51 - column 2, line 23; figure 2 *<br>----- | 1,9,10,17 | |

TECHNICAL FIELDS
SEARCHED (Int. Cl.4)

A 01 N
A 61 B

The present search report has been drawn up for all claims

| Place of search | Date of completion of the search | Examiner |
|---|---|---|
| THE HAGUE | 29-09-1989 | MOERS R.J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P0401)